# EUROPEAN PATENT APPLICATION

(11) **EP 0 860 832 A2**
(43) Date of publication of application: **26.08.1998**
(21) Application number: 97122409.2
(22) Date of filing: 18.12.1997
(51) Int. Cl.: G11B 33/08

(54) **Disc drive**

(30) Priority: 19.02.1997 JP 35122/97
(71) Applicant: KABUSHIKI KAISHA TOSHIBA, Kawasaki-shi, Kanagawa-ken 210 (JP)
(72) Inventor: Aoyama, Noboru, 1-1 Shibaura 1-chome Minato-ku Tokyo 105 (JP); Matsuda, Hiroshi, 1-1 Shibaura 1-chome Minato-ku Tokyo 105 (JP)
(74) Representative: Kramer, Reinhold, Dipl.-Ing.

(57) **Abstract**

A disc drive comprising a mechanical chassis 3 carrying mechanisms comprising a disc motor 13, an optical pickup 14, and other members for driving a disc and reproducing data therefrom; a vibration-damping member 4 formed of polyurethane elastomer containing ether linkages and elastically supporting a mechanical chassis 3 over a base 51 of a mechanical unit 5; a boss 52 and a screw 61 for fixing the mechanical chassis 3 supported over the base 51 of the mechanical unit 5 through the vibration-damping member 4; and a small-diameter portion 65 formed on the screw 61 and forming an annular space 100 between an inner wall surface of a hole 42 of the vibration-damping member 4 and a peripheral surface of the screw 61. The annular space 100 formed between the inner wall surface of the hole 42 of the vibration-damping member 4 and the peripheral surface of the screw 61 absorbs a displacement (flexture) of the vibration-damping member 4, thus allowing even the vibration-damping member 4 having a great thickness to have a high vibration-absorbing performance.

## Description

The present invention relates to a disc drive for recording data on a disc such as a CD-ROM disc, a DVD (digital video disc) disc, and the like or reproducing the data from the disc.

A disc drive for recording data on the disc or reproducing the data therefrom has a vibration-damping construction to prevent shocks applied from the outside of the disc drive from adversely affecting reading/writing operations or prevent vibrations which have occurred therein due to a high-speed drive of the disc from being transmitted to the outside. In the vibration-damping construction, a mechanical chassis on which a mechanism such as an optical pickup, a disc motor, and the like for driving the disc and recording data on the disc or reproducing the data therefrom are mounted is supported on another chassis through an elastic vibration-damping member.

The track pitch of the DVD known as an optical disc having a high density is much smaller than that of a compact disc and that of a laser disc. Thus, great shocks are applied from the outside to the disc drive recording data on such a high-density disc or reproducing the data therefrom. Under these circumstances, there is a growing demand for the development of an improved vibration-damping construction capable of absorbing vibrations which have occurred outside the disc drive.

The problem of the internal vibration which occurs inside the disc drive when a disc having a deviated center of gravity from a designated position is driven at a high speed can not be ignored. That is, the disc having a deviated center of gravity generates vibrations synchronized with the rotation period thereof. The energy generated by the vibration becomes greater in proportion to the rotational speed of the disc. In particular, when a CD-ROM disc drive enabling the reproduction of data at a high speed, for example, a 16-fold speed or 24-fold speed is incorporated in a compact or lap-top information processing apparatus, vibrations which have occurred therein is transmitted to operator's hands through a key board or the like mounted thereon, thus making the operator uncomfortable. In such a situation, there is a growing demand for the development of the improved vibration-damping construction capable of absorbing vibrations which have occurred inside the disc drive.

Silicon rubber, natural rubber, butyl rubber, and the like are hitherto used as the material of the vibration-damping member (damper) constituting the vibration-damping construction of the disc drive. The vibration-damping member composed of such a material is required to have a sufficiently large thickness so that it can be prevented from permanently strained. But the vibration-damping member having a large thickness has a high degree of hardness, thus having a low degree of vibration-absorbing efficiency. Consequently, it is difficult for the disc drive to have a favorable vibration-damping performance.

It is accordingly an object of the present invention to provide a disc drive having a vibration-damping construction not permanently strained and allowing a stable operation to be accomplished for a long time against shocks applied there from outside.

It is another object of the present invention to provide an inexpensive disc drive having a simple construction and an improved vibration-absorbing performance so that it can be reliably used.

In order to achieve the objects, the disc drive according to a first invention comprises a chassis on which a first mechanism for driving a disc and a second mechanism for recording data on the disc or reproducing the data therefrom are mounted; a supporting member; a vibration-damping member elastically supporting the chassis over the supporting member and having a hole; a fixing member inserted into the hole and fixing the chassis supported over the supporting member through the vibration-damping member; and a small-diameter portion formed on the fixing member and forming an annular space between an inner wall surface of the hole and a peripheral surface of the fixing member.

In the disc drive of the present invention, the annular space formed between the inner wall surface of the hole of the vibration-damping member and the peripheral surface of the fixing member, namely, the boss or the screw, allows the vibration-damping member to have an improved vibration-absorbing performance. Even though the vibration-damping member has a great thickness to increase its hardness and to prevent the permanent strain from occurring, the annular space serves as a means for preventing the vibration-damping member from excessively deteriorating in its vibration-absorbing performance allows the vibration-damping member to be durable for a long time.

A disc drive according to a second invention comprises a chassis on which a first mechanism for driving a disc and a second mechanism for recording data on the disc or reproducing the data therefrom are mounted; a supporting member; a vibration-damping member elastically supporting the chassis over the supporting member and having a hole, and formed of polyurethane elastomer containing ether linkages, and a fixing member inserted into the hole of the elastic vibration-damping member and fixing the chassis supported over the supporting member through the vibration-damping member.

Because the vibration-damping member is formed of the elastic polyurethane elastomer containing ether linkages and having a high internal loss factor, the vibration-damping construction has an improved vibration-absorbing performance without mechanically improving the vibration-damping construction. Accordingly, the vibration-damping member is allowed to have an enhanced vibration-absorbing performance by combining the vibration-damping member formed of the elastic polyurethane elastomer and the vibration-damping construction of the first invention with each other.

These and other objects, features and advantages of the present invention will become more apparent in light of the following detailed description of a best mode embodiment thereof, as illustrated in the accompanying drawings.
Fig. 1 is a perspective view showing a tray-unloaded state of a disc drive for reproducing data from a disc according to an embodiment of the present invention;
Fig. 2 is a perspective view showing a tray-loaded state of the disc drive shown in Fig. 1;
Fig. 3 is an exploded perspective view showing the construction of a mechanical unit incorporated in the disc drive shown in Fig. 1;
Fig. 4 is a side view showing the mechanical unit shown in Fig. 3;
Fig. 5A and Fig. 5B are sectional views showing a vibration-damping construction incorporated in the mechanical unit shown in Fig. 3;
Fig. 6 is a graph showing the relationship between temperature and the internal loss factor of polyurethane elastomer containing ether linkages as well as that of butyl rubber;
Fig. 7A and Fig. 7B are sectional views showing a vibration-damping construction according to another embodiment of the present invention; and
Fig. 8A and Fig. 8B are sectional views showing a vibration-damping construction according to still another embodiment of the present invention.

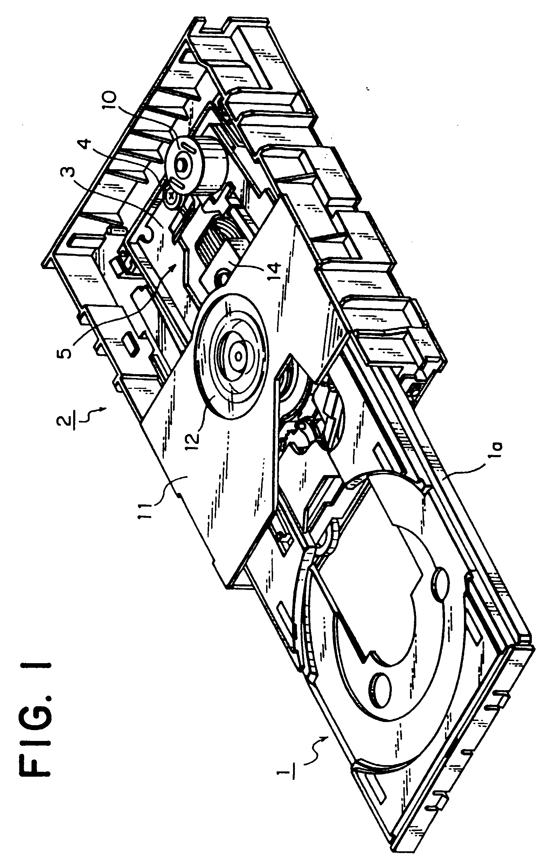

The disc drive according to an embodiment will be described below with reference to Figs. 1 through 6.

In the embodiment, the present invention is applied to a disc drive for reproducing data recorded on a CD-ROM disc.

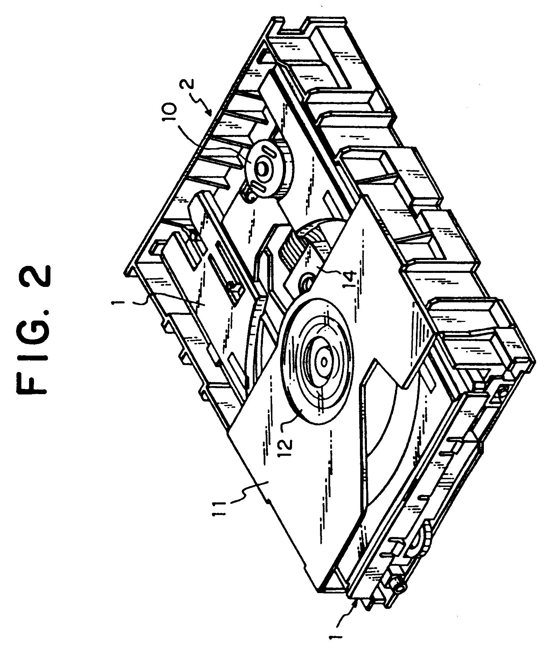

As shown in Figs. 1 and 2, the CD-ROM drive comprises a tray 1 on which an unshown disc is held; a main chassis 2, namely, the body of the CD-ROM drive; and an unshown cabinet integrally accommodating the tray 1 and the main chassis 2. The tray 1 has projections 1a formed at both ends thereof extending along the tray loading/unloading direction so that the projections 1a are supported by the main chassis 2. The main chassis 2 has an unshown means for supporting and guiding the projections 1a in loading the tray 1 into the cabinet and unloading it therefrom. In exchanging one disc with another, the tray 1 held in the main chassis 2 is unloaded from the main chassis 2 and moved to a position shown in Fig. 1 and then, loaded thereinto as shown in Fig. 2 to reproduce data from the disc held on the tray 1.

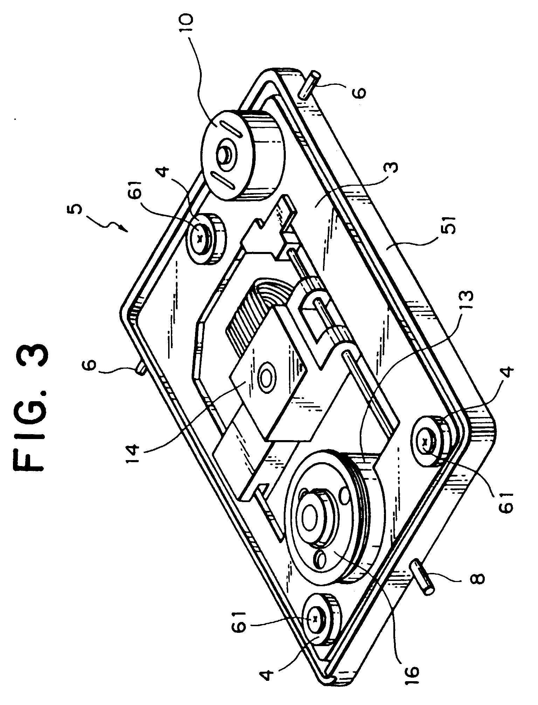

As shown in Fig. 3, the main chassis 2 (body of the CD-ROM drive) has a mechanical unit 5 comprising a mechanical chassis 3 on which mechanisms such as a disc motor 13, an optical pickup 14, and optical pickup-feeding mechanism (pickup-feeding motor 10) for driving the disc and reproducing data from the disc; and a part for supporting the mechanical chassis 3 over a base (supporting member) 51 of a mechanical unit 5 through three vibration-damping members (damper) 4.

The disc motor 13 has a turn table 16 fixed to the upper end of its shaft. A clamper 12 for holding the disc between the clamper 12 and the turn table 16 is rotatably held by a clamper holder 11 installed on the main chassis 2. The turn table 16 and the clamper 12 are connected with each other by the magnetic force of a magnet mounted on the turn table 16 or the clamper 12 or magnets mounted on both.

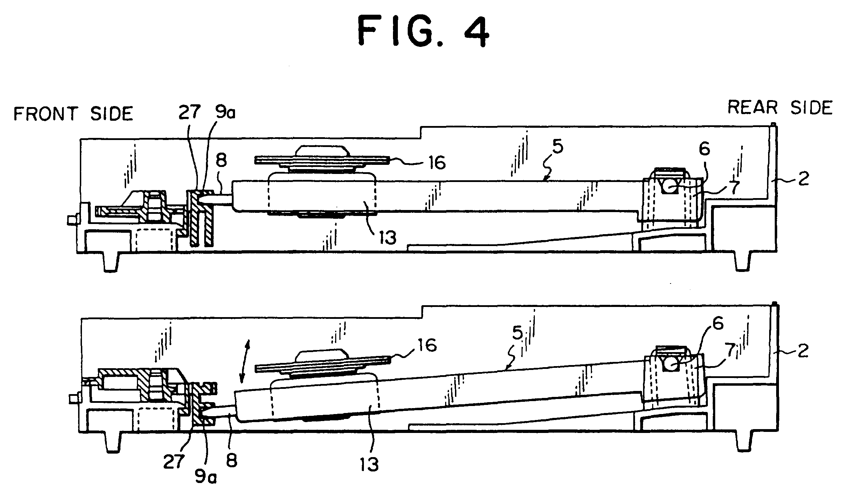

Referring to Fig. 4, the mechanical unit 5 has two rotation shafts 6 and one elevation shaft 8 both serving as connection parts for connecting the mechanical unit 5 and the main chassis 2 with each other. Each of the two rotation shafts 6 is supported by each of two bearings 7 mounted on the main chassis 2. The elevation shaft 8 projects forward from the front side (side in which the tray 1 is unloaded from the main chassis 2) and is inserted into the guide groove 9a to be held thereby. The guide groove 9a is formed on a peripheral surface of a cylindrical cam 27 serving as one of component parts of a mechanism for moving the mechanical unit 5 upward and downward. The elevation shaft 8 is moved upward and downward along the guide groove 9a with the rotation of the cylindrical cam 27. The mechanical unit 5 pivots vertically within a predetermined angle on the rotation shafts 6, with the rotation of the cylindrical cam 27.

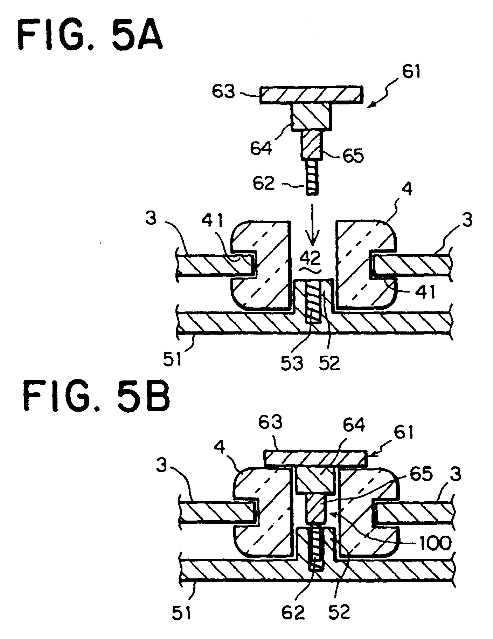

Referring to Figs. 5A and 5B, the part in which the mechanical chassis 3 is supported on the base 51 of the mechanical unit 5 through the vibration-damping member (damper) 4 is described in detail below.

The cylindrical vibration-damping member 4 has a predetermined thickness to prevent it from strained permanently. The vibration-damping member 4 has a concave (groove) 41 into which the mechanical chassis 3 is inserted and a hole 42 into which a screw 61 is inserted oppositely to a boss 52 projecting from the base 51 of the mechanical unit 5. In order to fix the vibration-damping member 4 to the boss 52, a screw portion 62 formed at the front or lower end of the screw 61 is tightened into a screw hole 53 of the boss 52.

The screw 61 comprises the screw portion 62; a pressing portion 63 for pressing the vibration-damping member 4 downward; a fitting portion 64 fitting into the inner peripheral surface of the hole 42 of the vibration-damping member 4, thus preventing the vibration-damping member 4 from being vibrated, namely, from being displaced widthwise; and a small-diameter portion 65 for securing an annular space 100 between it and the inner peripheral surface of the hole 42. That is, the diameter of the small-diameter portion 65 is smaller than that of the fitting portion 64 and that of the boss 52. The small-diameter portion 65 of the screw 61 are at approximately the same height as those of the groove 41 of the vibration-damping member 4.

A construction comprising the boss 52, the screw 61, and the vibration-damping member 4 has the space 100 formed between the inner peripheral surface of the hole 42 and the small-diameter portion 65 of the screw 61. The space 100 absorbs the displacement (flexture) of the groove 41 of the vibration-damping member 4 with respect to the axis thereof, thus acting as a means for allowing the vibration-damping member 4 to have an improved vibration-absorbing performance. Even though the vibration-damping member 4 has a great thickness to increase its hardness, the space 100 serves as a means for preventing the vibration-damping member 4 from deteriorating in its vibration-absorbing performance, thus allowing the vibration-damping member 4 to be durable for a long time.

The material of the vibration-damping member 4 will be described below. As described previously, silicon rubber, natural rubber, butyl rubber are used as the material of the conventional vibration-damping member. When the vibration-damping member composed of such a material has a large thickness to prevent it from being permanently strained, it has a high degree of hardness and hence a low degree of vibration-absorbing efficiency. Further, the hardness of the vibration-damping member composed of such a material changes according to the change in temperature of an environment in which it is used. More specifically, it is incapable of having a favorable vibration-damping function in an environment having an excessively high or low temperature.

As a result of the present inventors' researches and experiments, they have found that polyurethane elastomer containing ether linkages (hereinafter referred to as ether polyurethane elastomer) can be preferably used as the material of the vibration-damping member 4. Polyol and isocyanate react with each other to form polyurethane (high polymer) having urethane bonds. As the isocyanate, MDI (methylene.di.isocyanate) or TDI (toluylene.di.isocyanate) can be preferably used. The polyol contains PPG (polypropylene glycol) as its main component.

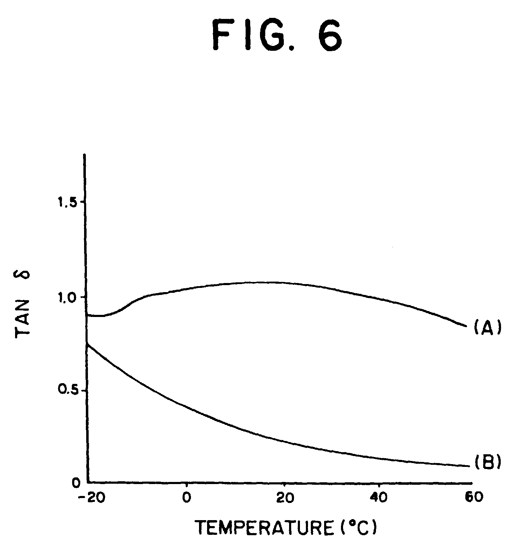

The ether polyurethane elastomer has the following characteristics: low in hardness (0 - 20 in the hardness specified by JIS); high in internal loss factor (high in vibration-absorbing property); hardly permanently strained at the normal temperature; water-resistant; oil-resistant; ozone-resistant; and hardly hardened at the normal temperature and temperatures in the vicinity thereof. Fig. 6 shows the relationship between temperature and the internal loss factor of the ether polyurethane elastomer (A) as well as that of butyl rubber (B).

The inventors' have found in their experiments that when the vibration-damping member 4 composed of the ether polyurethane elastomer is applied to the vibration-damping construction of the mechanical chassis 3, the vibration-damping construction was high in its vibration-damping performance, even though the space 100 was not formed inside the vibration-damping member 4. They have also found that needless to say, the formation of the space 100 inside the vibration-damping member 4 allowed the vibration-damping construction to be high in its vibration-damping performance.

In addition to the ether polyurethane elastomer, elastomer containing olefin (thermoplastic) and a mixture of the elastomer containing the olefin and elastomer containing styrene can be preferably used as the material of the vibration-damping member 4.

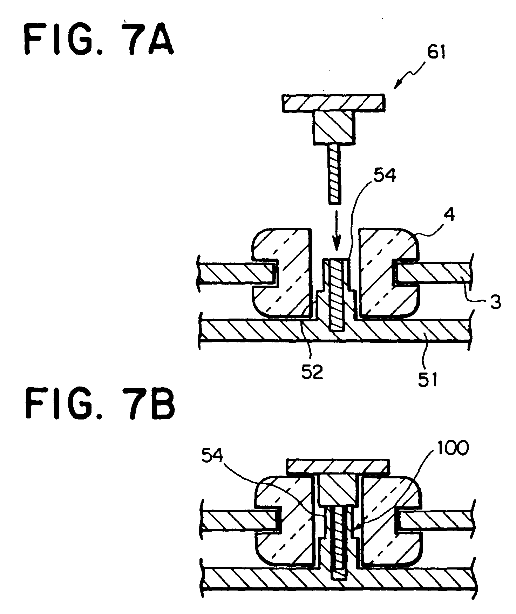

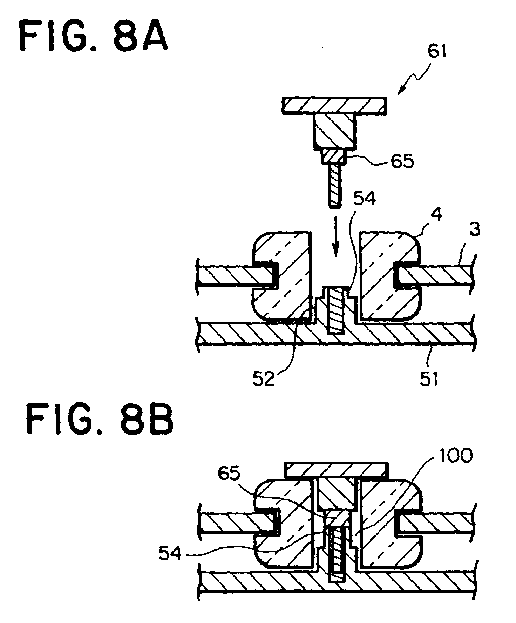

Figs. 7A, 7B, 8A and 8B show modifications of the vibration-damping construction of the embodiment. In the modification shown in Figs. 7A and 7B, the boss 52 projecting from the base 51 of the mechanical unit 5 has a small-diameter portion 54 formed thereon, instead of forming the small-diameter portion on the screw. In the modification shown in Figs. 8A and 8B, the screw 61 and the boss 52 have the small-diameter portions 65 and 54 formed thereon, respectively.

As described above, the present invention is applied to the disc drive for reproducing data recorded on the CD-ROM disc. But the disc drive of the present invention is applicable to any type of apparatuses, for example, an apparatus for reproducing data recorded on a DVD provided that it comprises a mechanism for driving an optical disc. For example, the disc drive of the present invention is applicable to a disc drive capable of recording data on an optical disc as well as the disc drive for reproducing data from the optical disc.

Although the present invention has been shown and described with respect to a best mode embodiments thereof, it should be understood by those skilled in the art that the foregoing and various other changes, omissions, and additions in the form and detail thereof may be made therein without departing from the spirit and scope of the present invention.

## Claims

1. A disc drive comprising:
a chassis on which a first mechanism for driving a disc and a second mechanism for recording data on the disc or reproducing the data therefrom are mounted;
a supporting member;
a vibration-damping member elastically supporting the chassis over the supporting member and having a hole;
a fixing member inserted into the hole and fixing the chassis supported over the supporting member through the vibration-damping member; and
a small-diameter portion formed on the fixing member and forming an annular space between an inner wall surface of the hole and a peripheral surface of the fixing member.

2. The disc drive as set forth in claim 1,
wherein the fixing member comprises a boss projecting from the supporting member and having the small-diameter portion; and a screw connected with the boss.

3. The disc drive as set forth in claim 1,
wherein the fixing member comprises a boss projecting from the supporting member and a screw having the small-diameter portion and connected with the boss.

4. The disc drive as set forth in claim 1,
wherein the fixing member comprises a boss projecting from the supporting member and a screw connected with the boss; and the boss and the screw have a first small-diameter portion and a second small-diameter portion, respectively forming an annular space between the inner wall surface of the hole and the peripheral surface thereof.

5. The disc drive as set forth in claim 1,
wherein the annular space formed between the inner wall surface of the hole and the peripheral surface of the fixing member is formed at a position excluding both ends in an axial direction of the hole.

6. The disc drive as set forth in claim 1,
wherein the vibration-damping member has a concave for supporting the chassis in a radial direction of the hole.

7. The disc drive as set forth in claim 1,
wherein the vibration-damping member is formed of polyurethane elastomer containing ether linkages, elastomer containing olefin or elastomer containing styrene.

8. A disc drive comprising:
a chassis on which a first mechanism for driving a disc and a second mechanism for recording data on the disc or reproducing the data therefrom are mounted;
a supporting member;
a vibration-damping member elastically supporting the chassis over the supporting member and having a hole, and formed of polyurethane elastomer containing ether linkages; and
a fixing member inserted into the hole and fixing the chassis supported over the supporting member through the vibration-damping member.

9. The disc drive as set forth in claim 8,
wherein the vibration-damping member has a concave for supporting the chassis in a radial direction with respect to an axis of the hole.

10. The disc drive as set forth in claim 8,
wherein the fixing member comprises a boss projecting from the supporting member and a screw connected with the boss.
